# EUROPEAN PATENT APPLICATION

(11) **EP 4 484 376 A1**
(43) Date of publication of application: **01.01.2025**
(21) Application number: 23306020.1
(22) Date of filing: 26.06.2023
(51) Int. Cl.: C01D 15/04, C01F 17/36, C01G 15/00, H01M 10/0562, H01M 10/54

(54) **RECYCLING PROCESS FOR HALIDE SOLID ELECTROLYTES**

(71) Applicant: Saint-Gobain Ceramics & Plastics Inc., Worcester, Massachusetts 01615 (US)
(72) Inventor: DANET, Remi, 93300 Aubervilliers (FR); MARCHANDIER, Thomas, 93300 Aubervilliers (FR); OUSPENSKI, Vladimir, 93300 Aubervilliers (FR); ARZAKANTSYAN, Mikayel, 93300 Aubervilliers (FR); ASSAT, Gaurav, 92400 Courbevoie (FR)
(74) Representative: Saint-Gobain Recherche

(57) **Abstract**

The invention pertains to a recycling process of a material comprising a halide solid electrolyte (HSE) of formula (I) M_{3-z}(Me^{k+})_{f}X_{3-z+k*f}, said process comprising successively: a) adding (an) ammonium salt(s) of X' to a solution comprising the HSE, wherein X and X' are halogens, in particular independently chosen from Cl, Br, I and any combination thereof; b) filtering and evaporating the solution obtained in step a) to obtain a dry powder; c) heating the dry powder obtained in step b), and d) obtaining a recycled HSE of formula (I). The invention further concerns a cathode composite and an electrolyte comprising a recycled HSE obtained from the recycling process according to the invention and an all-solid-state battery comprising such a cathode composite and/or electrolyte.

## Description

### Technical field

The present invention belongs to the field of all-solid-state rechargeable batteries (ASSB) and in particular relates to the recycling and reuse of their constituents. Specifically, the present invention pertains to the recycling and reuse of halide solid electrolyte materials.

### Technical background

ASSBs are of particular interest as a substitute to traditional Li-Ion batteries, especially since they raise fewer safety concerns and have higher capacities.

To obtain an ASSB, a solid electrolyte is used instead of the liquid electrolytes found in Li-Ion batteries. Usually, ASSBs use Li-metal anodes and high energy NMC cathode particles as cathode active material, said particles being incorporated into the solid state electrolyte to form the cathode composite of the ASSB.

Such solid electrolyte is for example chosen from lithium thiophosphate (β-Li₃PS₄, also called "LPS"), argyrodite (Li₆PS₅Cl) such as described in H.J. Deiseroth, et al. "LiePSsX: a class of crystalline Li-rich solids with an unusually high Li+ mobility." Angew. Chem. Int. Ed., 47 (2008), pp. 755-758 and halides, for example Li₃InCl₆, such as described in X. Li et al. "Air-stable Li3InCl6 electrolyte with high voltage compatibility for all-solid-state batteries." Energy Environ. Sci., 2019,12, pp. 265-267; Schmidt, M. O. et al. "Zur Kristallstruktur von Li3InCl6." Zeitschrift für Anorg. und Allg. Chemie 1999, 625 (4), 539-540; and G.Meyer, et al. "Handbook on the Physics & Chemistry of Rare Earths", V.28, chapter 177, 2000 Elsevier Sci.

Halide solid electrolytes are of particular interest since they display good ionic conductivity (above 2 mS/cm), high electro-chemical stability against oxidation at the cathode side and a better compactibility (deformability) than other solid-state electrolytes.

However, concerns about the environmental impact and resource depletion arise from the production and disposal of batteries.

### Summary of the invention

### Technical problem

One of the major challenges associated with halide solid electrolytes in ASSBs is their degradation (ionic conductivity, structural integrity) over multiple charge-discharge cycles. This degradation can significantly limit the overall performance and lifespan of the ASSB, leading to increased costs and environmental concerns associated with its disposal. Therefore, a need exists for a mean to recycle and reuse halide solid electrolytes.

### Solution to the technical problem

The inventors have surprisingly discovered that by adding ammonium halide salts to a solution comprising a corresponding halide solid electrolyte, said halide solid electrolyte may be recovered.

Accordingly, in a first aspect, the present invention concerns a recycling process of a material comprising a halide solid electrolyte of formula (I)

M_{3-z}(Me^{k+})_{f}X_{3-z+k*f} (I)

wherein
- -3≤z≤3, 2≤k<6, 0≤f≤1;
- M comprises an alkali metal element;
- Me comprises a divalent, trivalent, tetravalent, pentavalent or hexavalent metal element or any combination thereof, in particular Me is chosen from:
   i. alkaline earth metals, including Ba, Mg, Ca, Sr,
   ii. rare earth elements such as Y, Sc, Ce, Gd, Er, La, Yb and their combinations,
   iii. a 3d transition metal such as Zn, Cu, V, and
   iv. an element chosen from Zr, Ti, Sn, Th, Ge, Ta, Nb, Mo, W, Sb, Te, In Bi, Al, Ga, and
   v. any combination thereof, and
- X is a halogen, in particular chosen from Cl, Br, I and any combination thereof,
said process comprising successively:
a. adding (an) ammonium salt(s) of X' to a solution comprising the halide solid electrolyte,
   wherein X' is a halogen, in particular chosen from Cl, Br, I and any combination thereof,
b. filtering and evaporating the solution obtained in step a) to obtain a dry powder,
c. heating the dry powder obtained in step b), and
d. obtaining a recycled halide solid electrolyte of formula (I).

According to a second aspect, the present invention pertains to a cathode composite, designed to be used in an all-solid-state battery, comprising a recycled halide solid electrolyte of formula (I) obtained from the recycling process according to the invention.

According to a third aspect, the present invention relates to an electrolyte, designed to be used in an all-solid-state battery, comprising a recycled halide solid electrolyte of formula (I) obtained from the recycling process according to the invention.

According to a fourth aspect, the present invention concerns an all-solid-state battery comprising a cathode composite according to the invention and/or an electrolyte according to the invention.

### Advantages of the invention

The recycling process according to the invention offers numerous advantages. Firstly, it promotes the efficient utilization of resources by recovering valuable materials from disposed batteries, reducing the demand for new raw materials. This leads to a more sustainable and environmentally friendly approach to battery production and disposal.

Furthermore, the recycling process according to the invention enables to retain the electrochemical performances of the original halide solid electrolyte.

Moreover, the recycling process according to the invention may be implemented on battery constituents comprising a halide solid electrolyte, such as the cathode and/or the electrolyte, without the need to mechanically isolate the halide solid electrolyte from these constituents.

Finally, the recycling process according to the invention is more energy efficient than known recycling processes of batteries. Indeed, said processes usually require at least one more heating step, intended to break down and/or segregate the constituent of a battery while, as it is apparent herein after, a process according to the invention could be implemented on complete constituents of a battery.

### Brief description of drawings

Fig 1 represents the comparison of the XRD diffractograms of a recycled Li₃YCl₅Br (bottom line) to the original Li₃YCl₅Br (top line) according to the Example 1.
Fig 2 represents resistivity measurements of a recycled Li₃YCl₅Br (Fig 2b) to the original Li₃YCl₅Br (Fig 2a) according to the Example 1, said measurements are used according to methods known in the art to obtain the conductivities of the materials.
Fig 3 represents the comparison of the XRD diffractograms of a recycled Li₃YCl₅Br (bottom line) to the original Li₃YCl₅Br (top line) according to the Example 2.
Fig 4 represents resistivity measurements of a recycled Li₃YCl₅Br (Fig 4b) to the original Li₃YCl₅Br (Fig 4a) according to the Example 2, said measurements are used according to methods known in the art to obtain the conductivities of the materials.

### Detailed description of embodiments

Halide solid electrolytes may be represented by the following chemical formula (I)

M3-z(Me^{k+})_{f}X_{3-z+k*f}

wherein -3≤z≤3,
k is the valence of Me and 2≤k≤6, 0≤f≤1;
- M comprises an alkali metal element;
- Me comprises a metal other than an alkali metal, and
- X is a halogen.

In a particular embodiment, f is different from zero.

In a particular embodiment, Me comprises more than one metal element and k may be the average of the total of the valence of each metal element. For example, when Me includes a trivalent element and a tetravalent element in equal molar quantity, k=(3+4)/2=3.5. In particular, k may be 2, 3, 4 or 5.

It is understood that atomic vacancy can be present inside the unit cell of the halide solid electrolyte. In this case, atomic vacancy can be noted in the formula of the solid halide electrolyte as M_{3-z}(Me^{k+})_{f•y}X_{3-z+k*f} wherein • represents atomic vacancy inside the unit cell and y is the number of vacant atomic positions. In a particular embodiment, y can be f*(k-1).

In a particular embodiment, M can include Li, Na, K, Rb, Cs, or any combination thereof. For example, M can include at least one of Li and Na, or a combination thereof. In a further aspect, M can consist of at least one alkali metal element. For example, M can consist essentially of at least one alkali metal element chosen from the group consisting of Li, Na, K, Rb and Cs. In another example, M can consist of Li. In yet another example, M can consist of a combination of Li and at least one of Na, K, Rb and Cs. In still another example, M can consist of Na and at least one of Cs and Rb. In another example, M can consist of at least one of Na and Cs.

In a preferred embodiment, M is chosen from Li and Na, in particular M is Li.

In a particular embodiment, Me can include an alkaline earth metal element, a rare earth element, a 3d transition metal, an element chosen from Zr, Ti, Sn, Th, Ge, Ta, Nb, Mo, W, Sb, Te, In Bi, Al, Ga, and any combination thereof. For example, Me can include an alkaline earth metal including Ba, Mg, Ca and Sr, or any combination thereof. In another example, Me can include a rare earth element, in particular Me can consist of at least one rare earth element. The rare earth element may be chosen from Y, Sc, Ce, Gd, Er, La, Yb and their combinations. In a further example, Me can include a 3d transition metal, in particular chosen from Zn, Cu, V and any combination thereof. In still another example, Me can include an element chosen from Zr, Ti, Sn, Th, Ge, Ta, Nb, Mo, W, Sb, Te, In Bi, Al, Ga and any of their combinations.

In a preferred embodiment, Me is chosen from Y, In and any combination thereof.

In a particularly preferred embodiment, Me is chosen from Y, In and any combination thereof, k is 3 and f is 1.

In a particular embodiment, X can include a halogen, in particular chosen from Cl, Br, I and any combination thereof. In an example, X can include at least one of CI and Br. Preferably, X can consist of Cl, Br or any combination thereof.

In a particular embodiment, X represents Cl_{6-y}Br_{y} wherein 0 < y < 6, in particular 1 ≤ y ≤ 5 and preferably 1 ≤ y ≤ 3.

In a particular embodiment, the halide solid electrolyte can be represented by Li_{3-z}Me^{k+}X_{3-z+k}. When z is not 0, the complex metal halide can be non-stoichiometric. When z is 0, the complex metal halide can be stoichiometric. For example, -0.95≤z≤0.95. In another example, Me includes Y, Gd, Yb, In, Sc, Zn, Mg, Ca, Ba, Sn or a combination thereof, and X is Cl, Br or a combination thereof.

In a preferred embodiment, z is 0.

In a particular embodiment, the solid halide electrolyte can be represented by Li₃MeBr₆. In another particular embodiment, the solid halide electrolyte can be represented by Li₃MeCl₆. In these embodiments, Me can consist of at least one of the above-mentioned metal elements, having a valence of 3. Me can include at least one of the above-mentioned metal elements, wherein the average valence of the at least one metal element is 3.

In another particular embodiment, the solid halide electrolyte can consist of Li, Y, and at least one of CI and Br. For example, the solid halide electrolyte can consist of Li, Y and Cl. In another example, the solid halide electrolyte can consist of Li, Y and Br. In still another example, the solid halide electrolyte can consist of Li, Y, CI and Br. In a particular example, the solid halide electrolyte can be represented by Li₃ₓY₁₋ₓCl₃ or Li₃ₓY₁₋ₓBr₃, wherein 0<x≤0.5.

In another particular embodiment, the solid halide electrolyte can consist of Li, Gd and at least one of CI and Br. For example, the solid halide electrolyte can consist of Li, Gd and Cl. In another example, the solid halide electrolyte can consist of Li, Gd and Br. In still another example, the solid halide electrolyte can consist of Li, Gd, Cl and Br. In a particular example, the solid halide electrolyte can be represented by Li₃ₓGd₁₋ₓCl₃ or Li₃ₓGd₁₋ₓBr₃, wherein 0.01≤x<1.

In another particular embodiment, the solid halide electrolyte can consist of Li, In, and at least one of CI and Br. For example, the solid halide electrolyte can consist of Li, In and Cl. In another example, the solid halide electrolyte can consist of Li, In and Br. In still another example, the solid halide electrolyte can consist of Li, In, Cl and Br. In a particular example, the solid halide electrolyte can be represented by Li₃ₓIn₁₋ₓCl₃ or Li₃ₓIn₁₋ₓBr₃, wherein 0≤x<0.5.

In another particular embodiment, the solid halide electrolyte can consist of Li, In, Y and at least one of CI and Br. For example, the solid halide electrolyte can consist of Li, In, Y and Cl. In another example, the solid halide electrolyte can consist of Li, In, Y and Br. In still another example, the solid halide electrolyte can consist of Li, In, Cl and Br. In a particular example, the solid halide electrolyte can be represented by Li₃Y₁₋ₓInₓCl₆ or Li₃Y₁₋ₓInₓBr₆, or Li₃Y₁₋ₓInₓCl_{6-y}Br_{y}, wherein 0<x<0.5 and 1.0<y<3.0.

The solid halide electrolyte may be chosen from Li₃InCl₆, Li₃InBr₆, Li₃YCl₆, LisYBre, Li_{2.7}Y_{0.7}Zr_{0.3}Cl₆, Li_{2.8}Y_{0.8}Sn_{0.2}Cl₆, Li_{3.2}Y_{0.8}Zn_{0.2}Cl₆, Li_{3.2}Y_{0.8}Mg_{0.2}Cl₆, Li₃Y_{1/3}Zr_{1/3}Mg_{1/3}Cl₆, Li₃Y_{1/3}Sn_{1/3}Mg_{1/3}Cl₆, L₁₃Y_{1/3}Zr_{1/3}Zn_{1/3}Cl₆, Li_{2.95}Na_{0.05}YBr₆, Li_{2.95}K_{0.05}YBr₆, Li_{2.95}Cs_{0.05}YBr₆, Li₃Y_{0.7}Gd_{0.3}Br₆, Li₃Y_{0.8}Yb_{0.2}Br₆, Li₃Y_{0.9}La_{0.1}Br₆, Li_{2.9}Y_{0.9}Ce_{0.1}Br₆, Li₃In_{0.5}Y_{0.5}Cl₆, Li₃Y(Cl,Br)₆ or Li₃(Y,In)₁(Cl,Br)₆.

The process according to the invention comprises a step a) of adding (an) ammonium salt(s) of X' to a solution comprising the halide solid electrolyte, wherein X' is a halogen, in particular chosen from Cl, Br, I and any combination thereof.

In other words, the process according to the invention may comprise the addition of the following salts: NH₄Cl, NH₄Br, NH₄I and any combination thereof.

In a preferred embodiment of the invention, when the halide solid electrolyte to be recycled contains different halide ions, the ammonium salts added during the step a) contain these halide ions.

In a still preferred embodiment of the invention, X and X' are identical.

Preferably, the ammonium salts added in the step a) according to the process of the invention are NH₄Cl and NH₄Br.

During the step a) according to the process of the invention, the ammonium salt(s) may be added at least in a molar ratio to the halide solid electrolyte that is of at least 4, preferably at least 5 and more preferably at least 6.

It means that the quantity of ammonium salt(s) in the solution obtained after step a) is at least 4 times bigger than the quantity of halide solid electrolyte to be recycled, preferably at least 5 times bigger than the quantity of halide solid electrolyte to be recycled and more preferably at least 6 times bigger than the quantity of halide solid electrolyte to be recycled.

After step a), one may control the pH of the obtained solution. A pH of less than 9, in particular an acid pH and preferably a pH of 6 or less ensures the dissolution of the ammonium salt(s).

The process according to the invention further comprises a step b) of filtering and evaporating the solution obtained in step a) to obtain a dry powder.

Said step b) may be executed by any filtering mean known by a person skilled in the art.

Said dry powder is, for example, in the form of beads.

The evaporating component of step b) may be performed by any evaporating means known in the art.

Said dry powder may consist of a complex formed by the halide solid electrolyte and the ammonium salt(s).

The process according to the invention further comprises a step c) of heating the dry powder obtained in in step b).

Said heating is preferably performed under nitrogen atmosphere.

Said heating aims at decomposing the complex obtained in step b), in particular by producing gaseous NH₃ and HX'.

Therefore, said step c) is preferably performed at a temperature comprised from 250 °C to 650 °C, in particular from 260 °C to 600 °C and preferably from 275 °C to 550 °C.

The above-mentioned temperatures are considered for a step c) happening at atmospheric pressure. A person skilled in the art could easily adapt said step c) to happen at a lower pressure, entailing lower heating temperatures to obtain the decomposition of the complex and the release of gaseous NH₃ and HX'.

Once said species (NH₃ and HX') are not released anymore, the remaining material is a recycled halide solid electrolyte of formula (I), as demonstrated in the examples below.

Thus, the recycling process according to the invention comprises a step d) of obtaining a recycled halide solid electrolyte of formula (I).

The recycling process according to the invention is applied to a material comprising a halide solid electrolyte of formula (I).

Said material may be a material of a battery, in particular of an all-solid-state battery, chosen from a cathode composite, a solid electrolyte, and a mixture thereof.

Indeed, the present invention is particularly advantageous in that, contrary to usual recycling processes in the field of batteries, especially of all-solid-state batteries, it does not require a step of breaking down the starting material, for example into elemental material.

By cathode composite it is intended to designate a composite that comprises a cathode active material and a halide solid electrolyte of formula (I).

The cathode active material is a material capable of storing and releasing metal ions, in particular alkali metal ions such as Li or Na ions.

As cathode active materials transition metal fluorides, polyanionic materials, fluorinated polyanionic materials, transition metal sulphides, transition metal oxyfluorides, transition metal oxysulphides, transition metal oxynitrides and lithium-containing transition metal oxide, doped or not, coated or not may be used. In particular, the cathode active material may be a transition metal oxide such as a lithium-cobalt oxide, a lithium-nickel-cobalt-aluminium oxide or a lithium-nickel-manganese-cobalt-oxide (NMC). Transition metal oxides suitable for use as a cathode active material may be, for example, LiNi_{0.6}Mn_{0.2}Co_{0.2}O₂ (NMC622), LiNi_{0.8}Mn_{0.1}Co_{0.1}O₂ (NMC811), Li(NiCoAl)O₂ and LiCo0₂. Preferably, the cathode active material is the transition metal oxide of the formula LiNi_{0.6}Mn_{0.2}Co_{0.2}O₂ (NMC622).

The cathode composite may comprise
- from 55 to 75 % wt., in particular from 60 to 70 % wt., and preferably 66.7 % wt. of cathode active material,
- from 20 to 40 % wt., in particular from 25 to 30 % wt., and preferably 28.6 % wt. of halide solid electrolyte of formula (I), and optionally
- from 1 to 10 % wt., in particular from 2 to 7 % wt., and preferably 4.8 % wt. of an electron conducting carbon compound.

The electron conducting compound may be chosen from natural or artificial graphite, graphene, carbon nano-tubes, acetylene black, Ketjen black, activated carbon, carbon fluoride, metal powders, conductive whiskers, conductive metal oxides, conductive polymers, metal fibres or carbon fibres.

The recycled halide solid electrolyte obtained from a process according to the invention may then be used to formulate new constituents of an all-solid-state battery, which may also be used to assemble a full all-solid-state battery.

Indeed, as demonstrated herein, the process according to the present invention allows to retain the electrochemical properties of the recycled halide solid electrolyte compared to the original material.

Thus, the present invention also pertains to a cathode composite, designed to be used in an all-solid-state battery, comprising a recycled halide solid electrolyte of formula (I) obtained from the recycling process according to the invention.

A cathode composite according to the present invention may correspond to the definition given in the present text for a cathode composite, with the notable exception that the halide solid electrolyte is at least partially made of a recycled halide solid electrolyte obtained from the recycling process according to the invention.

The present invention further pertains to a solid electrolyte, designed to be used in an all-solid-state battery, comprising a recycled halide solid electrolyte of formula (I) obtained from the recycling process according to the invention.

Finally, the present invention also concerns an all-solid-state battery comprising a cathode composite according to the invention and/or an electrolyte according to the invention.

### Examples

### Example 1: Recycling of a halide solid electrolyte

Li₃YCl₅Br₁ (110.07g) was dissolved in 240g of pure water. The pH of the obtained solution was controlled at around 2 or 3.

Next, ammonium bromide (33.42g) and ammonium chloride (91.27g) were added to the solution. Said solution was then filtered and dried in a rotavapor until all the water of the solution is evaporated.

For example, the drying in the rotavapor is carried out at 135 °C and at a pressure of 27 millibars (mbar).

About 227 g of powder of a Li₃YCl₅Br₁-NH₄Cl/NH₄Br complex was obtained. This complex was heated at 540 °C under nitrogen atmosphere. An ingot of around 106 g of Li₃YCl₅Br₁ was recovered.

Li₃YCl₅Br₁ was thus recycled with a yield of 96 %.

Then, the ingot was ground up in a mechanical grinder (Retsch RM 400) before performing further characterizations.

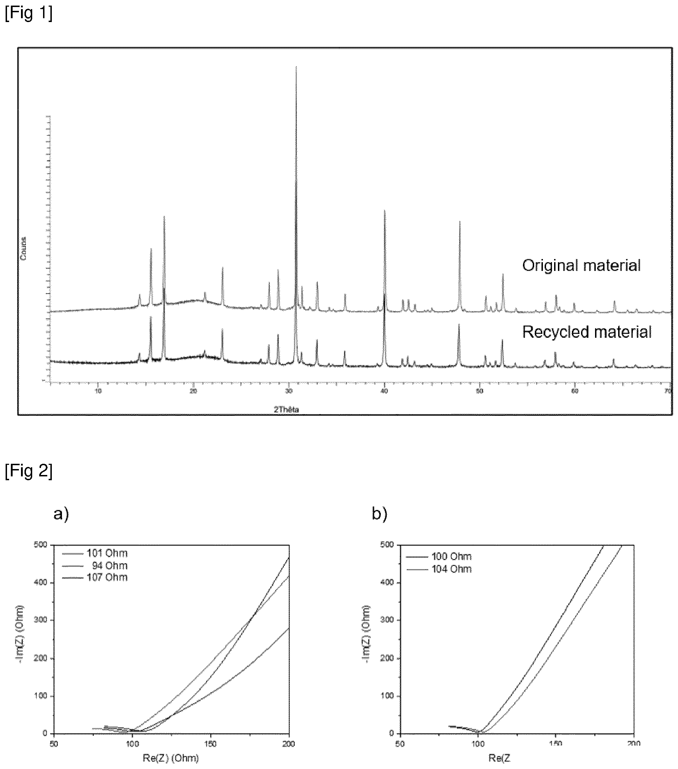

The Figure 1 shows that the XRD pattern of the recycled Li₃YCl₅Br₁, comprises the same peaks positions and relative intensities as the original material confirming the recovery of the exact same compound.

Conductivities measurements were performed on both the recycled and the original Li₃YCl₅Br₁ (see respectively Figure 2b and 2a). The original Li₃YCl₅Br₁ demonstrated a conductivity of 2.09µS/cm (+/- 0.09) while the recycled Li₃YCl₅Br₁ was measured at 2.05 µS/cm (+/- 0.05).

Therefore, the recycling process according to the invention allowed the halide solid electrolyte to retain its electrochemical performances.

### Example 2: Recycling of a cathode composite

A composite representing a positive electrode (cathode) containing 110.7 g of Li₃YCl₅Br₁, 1.11 g of a NMC811 cathode active material and 1.01 g of carbon fibers was formulated. Said composite was then dissolved in 1 500 g of pure water to obtain a solution.

Ammonium bromide (33.27 g) and ammonium chloride (91.42 g) were then added to the solution. The pH of the solution was controlled at about 6. Said solution was then filtered and dried into a rotavapor.

228.5 g of powder of a Li₃YCl₅Br₁-NH₄Cl/NH₄Br complex was obtained. This complex was heated at 540 °C under nitrogen atmosphere. 106.8 g of an ingot of Li₃YCl₅Br₁ was recovered.

Li₃YCl₅Br₁ was thus recycled with a yield of 97 %.

Then, the ingot was ground up in a mechanical grinder (Retsch RM 400) before performing further characterizations.

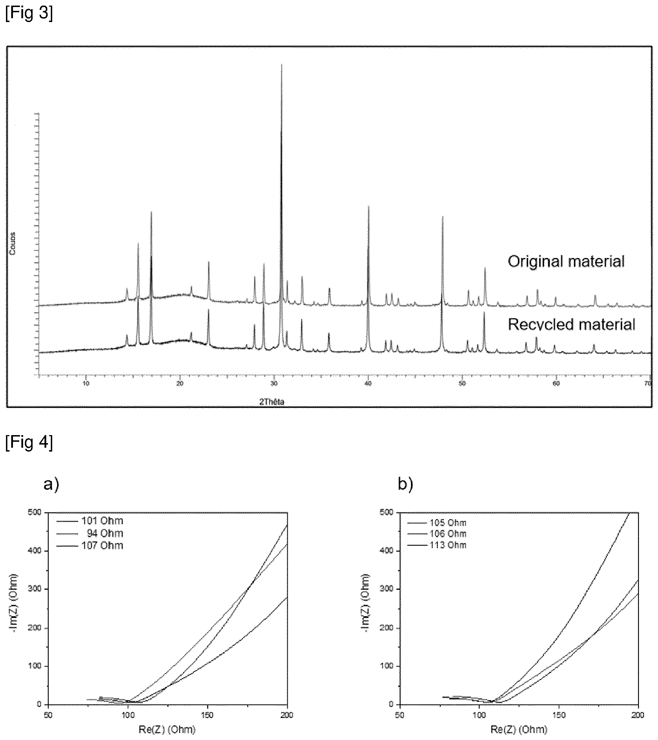

The Figure 3 shows that the XRD pattern of the recycled Li₃YCl₅Br₁, comprises the same peaks positions and relative intensities as the original material confirming the recovery of the exact same compound.

Conductivities measurements were performed on both the recycled and the original Li₃YCl₅Br₁ (see respectively Figure 4b and 4a). The original Li₃YCl₅Br1 demonstrated a conductivity of 2.09 µS/cm (+/- 0.09) while the recycled Li₃YCl₅Br₁ was measured at 1.89 µS/cm (+/- 0.08).

Therefore, the recycling process according to the invention allowed the halide solid electrolyte to retain its electrochemical performances.

## Claims

1. Recycling process of a material comprising a halide solid electrolyte of formula (I)
M_{3-z}(Me^{k+})_{f}X_{3-z+k*f} (I)
wherein
- -3≤z≤3, 2≤k<6, 0≤f≤1;
- M comprises an alkali metal element;
- Me comprises a divalent, trivalent, tetravalent, pentavalent or hexavalent metal element or any combination thereof, in particular Me is chosen from:
i. alkaline earth metals, including Ba, Mg, Ca, Sr,
ii. rare earth elements such as Y, Sc, Ce, Gd, Er, La, Yb and their combinations,
iii. a 3d transition metal such as Zn, Cu, V, and
iv. an element chosen from Zr, Ti, Sn, Th, Ge, Ta, Nb, Mo, W, Sb, Te, In Bi, Al, Ga, and
v. any combination thereof, and
- X is a halogen, in particular chosen from Cl, Br, I and any combination thereof,
said process comprising successively:
a) adding (an) ammonium salt(s) of X' to a solution comprising the halide solid electrolyte,
wherein X' is a halogen, in particular chosen from Cl, Br, I and any combination thereof,
b) filtering and evaporating the solution obtained in step a) to obtain a dry powder,
c) heating the dry powder obtained in step b), and
d) obtaining a recycled halide solid electrolyte of formula (I).

2. Recycling process according to claim 1, wherein M is chosen from Li and Na, in particular M is Li.

3. Recycling process according to any of the preceding claims, wherein z is 0.

4. Recycling process according to any of the preceding claims, wherein Me is chosen from Y, In and any combination thereof, k is 3 and f is 1.

5. Recycling process according to any of the preceding claims, wherein X represents Cl_{6-y}Br_{y} wherein 0 < y < 6, in particular 1 ≤ y ≤ 5 and preferably 1 ≤ y ≤ 3.

6. Recycling process according to any of the preceding claims, wherein X and X' are identical.

7. Recycling process according to any of the preceding claims, wherein the ammonium salts are NH₄Cl and NH₄Br.

8. Recycling process according to any of the preceding claims, wherein the ammonium salt(s) is (are) added in a molar ratio to the halide solid electrolyte of at least 4, preferably at least 5 and more preferably at least 6.

9. Recycling process according to any of the preceding claims, wherein the heating step c) is performed at a temperature comprised from 250 °C to 650 °C, in particular from 260 °C to 600 °C and preferably from 275 °C to 550 °C.

10. Recycling process according to any of the preceding claims, wherein the material is a material of a battery, in particular of an all-solid-state battery, chosen from an anode composite, a solid electrolyte, and a mixture thereof.

11. Cathode composite, designed to be used in an all-solid-state battery, comprising a recycled halide solid electrolyte of formula (I) obtained from the recycling process according to any of claims 1 to 9.

12. Solid electrolyte, designed to be used in an all-solid-state battery, comprising a recycled halide solid electrolyte of formula (I) obtained from the recycling process according to any of claims 1 to 9.

13. All-solid-state battery comprising a cathode composite according to claim 10 and/or an electrolyte according to claim 11.
